(19)

Europäisches
Patentamt
European
Patent Office
Office européen
des brevets

(11) **EP 1 990 795 A1**

(12) **EUROPEAN PATENT APPLICATION**
published in accordance with Art. 158(3) EPC

(43) Date of publication:
**12.11.2008 Bulletin 2008/46**

(21) Application number: **07714940.9**

(22) Date of filing: **26.02.2007**

(51) Int Cl.:
**G09G 3/288** *(2006.01)*        **G09G 3/20** *(2006.01)*
**G09G 3/28** *(2006.01)*         **H04N 5/66** *(2006.01)*

(86) International application number:
**PCT/JP2007/053508**

(87) International publication number:
**WO 2007/099905 (07.09.2007 Gazette 2007/36)**

(84) Designated Contracting States:
**DE FR GB**

(30) Priority: **28.02.2006 JP 2006051731**
**28.02.2006 JP 2006051732**

(71) Applicant: **Matsushita Electric Industrial Co., Ltd.**
**Kadoma-shi**
**Osaka 571-8501 (JP)**

(72) Inventors:
• **MAEDA, Toshiyuki,**
**Matsushita El. Ind. Co., Ltd., IPROC**
**Osaka-shi, Osaka 540-6319 (JP)**
• **KIGO, Shigeo,**
**Matsushita El. Ind. Co., Ltd., IPROC**
**Osaka-shi, Osaka 540-6319 (JP)**

• **TSUJITA, Yoshiki,**
**c/o Matsushita El. Ind. Co., Ltd., IPROC**
**Osaka-shi, Osaka 540-6319 (JP)**
• **TOMIOKA, Naoyuki,**
**c/o Matsushita El. Ind. Co., Ltd., IPROC**
**Osaka-shi, Osaka 540-6319 (JP)**
• **YAMASHITA, Takeru,**
**c/o Matsushita El. Ind. Co., Ltd., IPROC**
**Osaka-shi, Osaka 540-6319 (JP)**
• **KITATANI, Kei,**
**c/o Matsushita El. Ind. Co., Ltd., IPROC§**
**Osaka-shi, Osaka 540-6319 (JP)**

(74) Representative: **Balsters, Robert et al**
**Novagraaf International S.A.**
**25, avenue du Pailly**
**1220 Les Avanchets - Geneva (CH)**

(54)    **PLASMA DISPLAY PANEL DRIVE METHOD AND PLASMA DISPLAY DEVICE**

(57)    The present invention provides a method of driving a plasma display panel that displays an image with high brightness, high contrast, and high display quality by stabilizing selective initializing operation. To realize it, a plurality of subfields each having a setup period, an address period, and a sustain period are provided in one field period. Retention time for retaining voltages to be applied to a scan electrode and a sustain electrode is provided between time when voltage for weakening the final sustain discharge in the sustain period is applied to the sustain electrode and time when a ramp waveform voltage which decreases is applied to the scan electrode in the setup period in the following subfield. The retention time is controlled based on average brightness of image signals or ambient temperature.

FIG. 4

**Description**

TECHNICAL FIELD

The present invention relates to a method of driving a plasma display panel used for a wall-hanging television or a large-sized monitor and to a plasma display device.

BACKGROUND ART

In an AC-plane-discharging-type panel representing a plasma display panel (hereinbelow, simply called "panel"), a number of discharge cells are formed between a front plate and a rear plate which are disposed so as to face each other.

In the front plate, a plurality of display electrode pairs each made of a scan electrode and a sustain electrode are formed in parallel with each other on a front glass substrate, and a dielectric layer and a protection layer are formed so as to cover the display electrode pairs. In the rear plate, a plurality of data electrodes parallel with each other are formed on a rear glass substrate, a dielectric layer is formed so as to cover the data electrodes, and a plurality of barriers are formed on the dielectric layer in parallel with the data electrodes. A phosphor layer is formed on each of the surface of the dielectric layer and the side faces of the barriers.

The front plate and the rear plate are disposed so as to face each other so that the display electrode pairs and the data electrodes solid-cross each other, and are sealed. In an internal discharge space, for example, a discharge gas containing xenon of 5% in partial pressure ratio is filled. The discharge cells are formed in the parts where the display electrode pairs and the data electrodes face each other. In the panel having such a configuration, ultraviolet light is generated by gas discharge in each of the discharge cells. With the ultraviolet light, phosphors of red (R), green (G), and blue (B) are excited to emit light, thereby displaying a color image.

As a method of driving the panel, the subfield method is generally used, which is a method of dividing one field period into a plurality of subfields and displaying a gray-scale image in accordance with a combination of subfields to emit light.

Each subfield has a setup period, an address period, and a sustain period. In the setup period, initializing discharge is caused to form a wall charge necessary for the following addressing operation on each of the electrodes. As the initializing operation, there are an initializing operation of making the initializing discharge occur in all of the discharge cells (hereinbelow, called "all-cell initializing operation") and an initializing operation of making the initializing discharge occur in a discharge cell subjected to sustain discharge (hereinbelow, called "selective initializing operation").

In the address period, addressing discharge is selectively caused in the discharge cells to display an image, thereby generating wall charges. In the sustain period, a sustain pulse is applied alternately to the display electrode pairs each made of the scan electrode and the sustain electrode, thereby causing sustain discharge in the discharge cells in which the addressing discharge occurred. The phosphor layers of the corresponding discharge cells are allowed to emit light, thereby displaying an image.

Among the subfield methods, a novel driving method is disclosed, extremely reducing light emission which is not related to gray-scale display and realizing improved contrast ratio by performing initializing discharge using a voltage waveform that changes gently and selectively performing initializing discharge on a discharge cell subjected to the sustain discharge.

Concretely, for example, in the setup period for one of a plurality of subfields, the all-cell initializing operation of discharging all of the discharge cells is performed. In the setup period for each of the other subfields, the selective initializing operation of initializing only the discharge cell subjected to the sustain discharge is performed. As a result, all the light emission that is not related to display is the light emission accompanying the discharge of the all-cell initializing operation, and image display of high contrast can be performed. Such a technique is described in, for example, Patent Document 1.

In the driving method realizing high contrast, by reliably performing the selective initializing operation, high-contrast and reliable addressing operation can be performed.

On the other hand, the panels are having higher definition in recent years. When a discharge cell is made finer for higher definition, the ratio of a non-light-emission area increases, and light brightness per unit area tends to decrease. Consequently, a study of improving brightness by increasing the number of sustain pulses, a study of improving brightness by increasing luminous efficiency by making xenon partial pressure in the discharge gas higher, and the like are being conducted. However, it was found that when the brightness is improved by making the xenon partial pressure higher or increasing the number of sustain pulses, the selective initializing operation becomes unstable. The following addressing and sustaining operations also become unstable, and there is the possibility that the image display quality deteriorates. In addition, a problem became also apparent such that, since the discharge characteristic changes depending on the temperature of the panel, the temperature range in which the selective initializing operation can be performed stably is limited to some extent.

Patent Document 1: Unexamined Japanese Patent Publication No. 2000-242224

DISCLOSURE OF THE INVENTION

The present invention has been achieved in view of the problems and provides a method of driving a panel and a plasma display device realizing high brightness, high contrast, and high image display quality by stabilizing selective initializing operation in a wide temperature range.

The present invention provides a method of driving a panel including a plurality of discharge cells each having a display electrode pair, which is formed of a scan electrode and a sustain electrode, and a data electrode, and displaying an image by providing a plurality of subfields in one field period, each of the subfields having a setup period for causing initializing discharge in the discharge cell by applying a ramp waveform voltage that gently decreases to the scan electrode, an address period for causing addressing discharge in the discharge cell, and a sustain period for applying sustain pulse voltage alternately to the display electrode pair to cause sustain discharge in the discharge cell and, after that, applying voltage for weakening the final sustain discharge to the sustain electrode. Retention time for retaining voltages to be applied to the scan electrode and the sustain electrode is provided between time when the voltage for weakening final sustain discharge is applied to the sustain electrode and time when the ramp waveform voltage which decreases is applied to the scan electrode in the setup period in the following subfield, and the retention time is controlled based on average brightness of image signals or ambient temperature of the panel. Thus, the selective initializing operation can be stabilized in a wide temperature range, and the panel driving method realizing high brightness, high contrast, and high image display quality can be provided.

BRIEF DESCRIPTION OF THE DRAWINGS

FIG. 1 is an exploded perspective view showing the structure of a panel in an embodiment of the invention.

FIG. 2 is a diagram showing an electrode array of the panel.

FIG. 3 is a circuit block diagram of a drive circuit for driving the panel.

FIG. 4 is a waveform chart of a drive voltage applied to each of electrodes of the panel.

FIG. 5 is a diagram showing an outline of a drive waveform of one field in the embodiment of the invention.

FIG. 6 is a diagram showing the relation between APL and retention time in the embodiment of the invention.

FIG. 7A is a diagram showing retention time in a low-temperature drive mode in the embodiment of the invention.

FIG. 7B is a diagram showing retention time inn a high-temperature drive mode in the embodiment of the invention.

FIG. 8A is a diagram showing a result of measurement of the relation between temperature in a casing and temperature of the panel detected by a thermal sensor when an all-cell non-light-emission pattern is displayed in the embodiment of the invention.

FIG. 8B is a diagram showing a result of measurement of the relation between temperature in a casing and temperature of the panel detected by a thermal sensor when an all-cell light-emission pattern is displayed in the embodiment of the invention.

FIG. 9 is a schematic diagram showing the relations among lowest estimated temperature, highest estimated temperature, low-temperature threshold value, and high-temperature threshold value in the embodiment of the invention.

FIG. 10 is a circuit diagram of a scan electrode drive circuit and a sustain electrode drive circuit in the embodiment of the invention.

FIG. 11 is a timing chart illustrating operations of the drive circuits.

FIG. 12 is a diagram showing an outline of one field in a drive waveform of a panel in another embodiment of the invention.

FIG. 13A is a diagram showing an example of retention time Ts in a room-temperature drive mode of the embodiment.

FIG. 13B is a diagram showing a example of the retention time Ts in a low-temperature drive mode of the embodiment.

FIG. 13C is a diagram showing an example of the retention time Ts in a high-temperature drive mode of the embodiment.

DESCRIPTION OF REFERENCE NUMERALS

| | |
|---|---|
| 1 | plasma display device |
| 10 | panel |
| 21 | front panel (made of glass) |
| 22 | scan electrode |
| 23 | sustain electrode |
| 24, 33 | dielectric layers |
| 25 | protection layer |
| 28 | display electrode pair |
| 31 | rear plate |
| 32 | data electrode |
| 34 | barriers |
| 35 | phosphor layer |
| 51 | image signal processing circuit |
| 52 | data electrode drive circuit |
| 53 | scan electrode drive circuit |
| 54 | sustain electrode drive circuit |
| 55 | timing generation circuit |
| 57 | APL detection circuit |
| 58 | temperature estimation circuit |
| 81 | thermal sensor |
| 100, 200 | sustain pulse generation circuits |
| 110, 210 | power recovery circuits |
| 300 | setup waveform generation circuit |

310, 320     Miller integrators
400          scan pulse generation circuit

## PREFERRED EMBODIMENTS FOR CARRYING OUT OF THE INVENTION

A plasma display device in embodiments of the present invention will be described hereinbelow with reference to the drawings.

## EMBODIMENTS

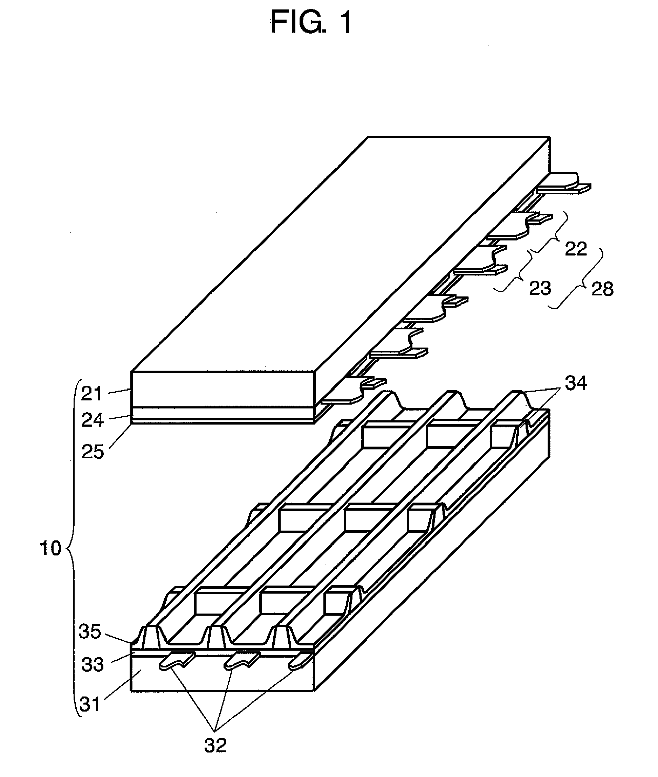

FIG. 1 is an exploded perspective view showing the structure of panel 10 in an embodiment of the invention. A plurality of display electrode pairs 28 each made of scan electrode 22 and sustain electrode 23 are formed on front plate 21 made of glass. Dielectric layer 24 is formed so as to cover scan electrode 22 and sustain electrode 23, and protection layer 25 is formed on dielectric layer 24. A plurality of data electrodes 32 are formed on rear plate 31, dielectric layer 33 is formed so as to cover data electrodes 32 and, further, barrier 34 in a lattice shape is formed on dielectric layer 33. On side faces of barrier 34 and on dielectric layer 33, phosphor layers 35 emitting light in red (R), green (G), and blue (B) are provided.

Front plate 21 and rear plate 31 are disposed facing each other so that display electrode pairs 28 and data electrodes 32 cross each other with a small discharge space therebetween, and the outer periphery is sealed by a sealing member such as glass frit. In the discharge space, for example, mixed gas of neon and xenon is filled as a discharge gas. In the embodiment, the discharge gas in which the xenon partial pressure is set to 10% to improve brightness is used. The discharge space is partitioned into a plurality of sections by barriers 34, and discharge cells are formed at intersections of display electrode pairs 28 and data electrodes 32. By discharge and light emission of the discharge cells, an image is displayed.

The structure of the panel is not limited to the above-described one but, for example, a structure having stripe barriers may be also employed.

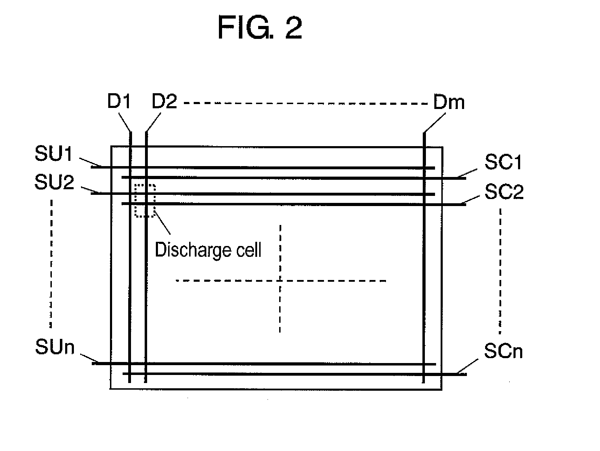

FIG. 2 is a diagram showing an electrode array of panel 10 in the embodiment of the invention. In panel 10, "n" pieces of scan electrodes SC1 to SCn (scan electrodes 22 in FIG. 1) and "n" pieces of sustain electrodes SU1 to SUn (sustain electrodes 23 in FIG. 1) which are long in the row direction are arranged, and "m" pieces of data electrodes D1 to Dm (data electrodes 32 in FIG. 1) which are long in the column direction are arranged. A discharge cell is formed at an intersection of a pair of scan electrode SCi (i = 1 to n) and sustain electrode SUi and one data electrode Dj (j = 1 to m), and m x n pieces of discharge cells are formed in the discharge space.

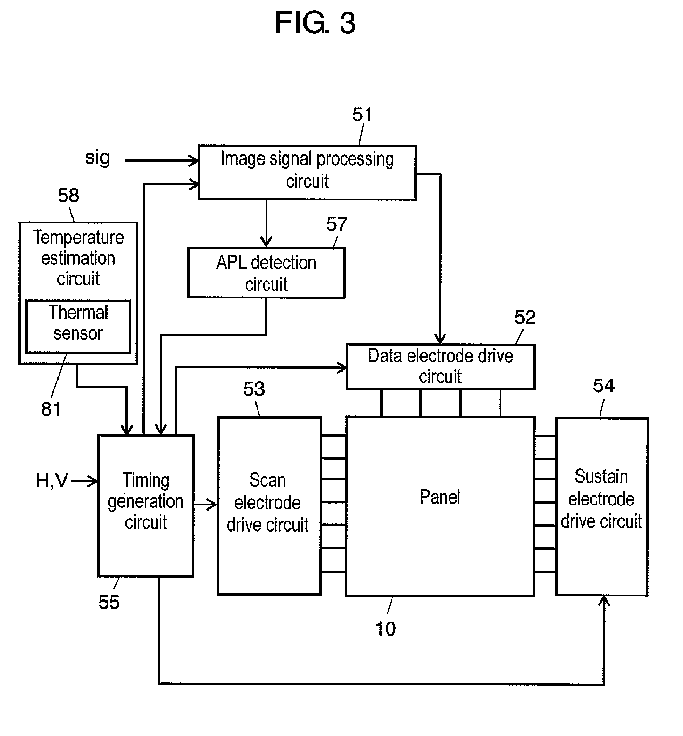

FIG. 3 is a circuit block diagram of a drive circuit for driving the panel in the embodiment of the invention. Plasma display device 1 has panel 10, image signal processing circuit 51, data electrode drive circuit 52, scan electrode drive circuit 53, sustain electrode drive circuit 54, timing generation circuit 55, APL detection circuit 57, temperature estimation circuit 58, and a power supply circuit (not shown) for supplying necessary power to the circuit blocks.

Image signal processing circuit 51 converts input image signal "sig" to image data indicative of light emission or non-light-emission of each subfield. Data electrode drive circuit 52 converts image data in subfields to signals corresponding to data electrodes D1 to Dm to drive data electrodes D1 to Dm.

APL detection circuit 57 detects an average picture level (hereinbelow, abbreviated as "APL") of the image signal "sig". Concretely, the APL is detected by using a generally known method such as accumulation of brightness values of image signals for one field period or one frame period.

Temperature estimation circuit 58 has thermal sensor 81 constructed by a generally known device such as a thermocouple used for detecting temperature. Temperature estimation circuit 58 calculates estimation values of the highest and lowest temperatures of panel 10 from temperatures around panel 10 detected by thermal sensor 81, in the embodiment, the temperature in the casing and outputs the result to timing generation circuit 55.

Timing generation circuit 55 generates various timing signals for controlling operations of the circuit blocks based on horizontal sync signal H, vertical sync signal V, APL detected by APL detection circuit 57, and the highest and lowest estimation temperatures estimated by temperature estimation circuit 58, and supplies the timing signals to circuit blocks. In the embodiment, retention time for applying voltage which does not cause discharge to scan electrode 22 and sustain electrode 23 is provided between the time when voltage for weakening the final sustain discharge is applied to sustain electrode 23 and the time when ramp waveform voltage which drops is applied to scan electrode 22 in the setup period for the following subfield. A timing signal for controlling the retention time based on average brightness of image signals and, further, the ambient temperature of panel 10 as necessary is output to scan electrode drive circuit 53 and sustain electrode drive circuit 54. In such a manner, a control for stabilizing the selective initializing operation and enhancing brightness and contrast is performed.

Scan electrode drive circuit 53 has setup waveform generation circuit 300 for generating a setup voltage waveform to be applied to scan electrodes SC1 to SCn in the setup period, and drives scan electrodes SC1 to SCn based on the timing signal. Sustain electrode drive circuit 54 drives sustain electrodes SU1 to SUn based on the timing signal.

In the embodiment, the position of attaching the thermal sensor to the plasma display device is set as follows. A heat-conduction sheet is adhered to the back side of panel 10, and an aluminum chassis is adhered to the heat-conduction sheet. A circuit board having drive circuits is attached to the aluminum chassis via a boss member, and the thermal sensor is attached on the surface of the circuit board.

Next, the waveform of a drive voltage for driving panel 10 and the driving operation will be described. Plasma display device 1 performs gray-level display by the subfield method, that is, by dividing one field period into a plurality of subfields and controlling light-emission/non-light-emission of each of the discharge cells on the subfield unit basis. Each of the subfields has a setup period, an address period, and a sustain period.

In the setup period, initializing discharge is made, and a wall charge necessary for the following addressing discharge is formed on each electrode. The initializing operation includes the all-cell initializing operation of making the initializing discharge occur in all of discharge cells and the selective initializing operation of making the initializing discharge occur in a discharge cell in which the sustain discharge is performed.

In the address period, addressing discharge is selectively caused in a discharge cell to emit light, thereby generating a wall charge. In the sustain period, sustain pulses of the number proportional to the luminance weight are alternately applied to the display electrode pair, and sustain discharge is allowed to occur in the discharge cell in which the addressing discharge occurs, thereby emitting light. The proportionality factor at this time is called luminance factor. The details of the subfield configuration will be described later. The waveform of the drive voltage in the subfield and the operation will be described.

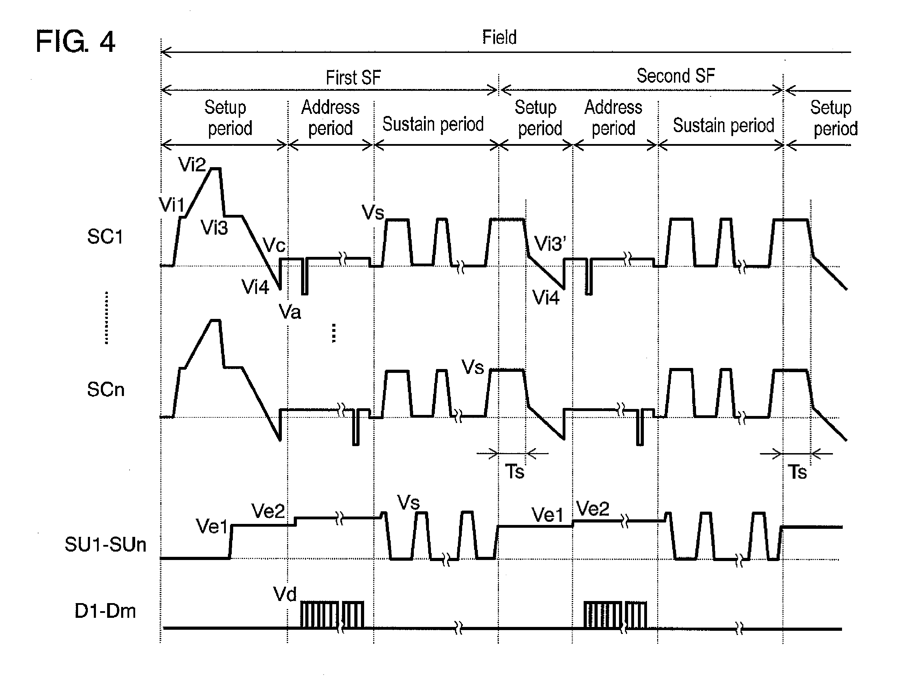

FIG. 4 is a waveform chart of a drive voltage applied to each of electrodes of panel 10 in the embodiment of the invention. FIG. 4 shows a subfield in which the all-cell initializing operation is performed and a subfield in which the selective initializing operation is performed.

First, the subfield in which the all-cell initializing operation is performed will be described.

In the first half of the setup period, 0V is applied to each of data electrodes D1 to Dm and sustain electrodes SU1 to SUn. To scan electrodes SC1 to SCn, a ramp waveform voltage which gently rises from voltage Vi1 equal to or below a discharge start voltage to voltage Vi2 exceeding the discharge start voltage is applied to sustain electrodes SU1 to SUn.

During the rise of the ramp waveform voltage, weak initializing discharge occurs between scan electrodes SC1 to SCn and sustain electrodes SU1 to SUn, and data electrodes D1 to Dm. A negative wall voltage is accumulated on scan electrodes SC1 to SCn and a positive wall voltage is accumulated on data electrodes D1 to Dm and sustain electrodes SU1 to SUn. The wall voltage on the electrodes expresses a voltage generated by the wall charge accumulated on the dielectric layer, the protection layer, the phosphor layer, and the like covering the electrodes.

In the latter half of the setup period, positive voltage Ve1 is applied to sustain electrodes SU1 to SUn. In contrast to sustain electrodes SU1 to SUn, a ramp waveform voltage (hereinbelow, also called "ramp voltage") which gently decreases from voltage Vi3 equal to or lower than the discharge start voltage to voltage Vi4 exceeding the discharge start voltage is applied to scan electrodes SC1 to SCn. During the application, weak initializing discharge occurs between scan electrodes SC1 to SCn and sustain electrodes SU1 to SUn and data electrodes D1 to Dm. The negative wall voltage over scan electrodes SC1 and SCn and the positive wall voltage over sustain electrodes SU1 to SUn are weakened, and the positive wall voltage over data electrodes D1 to Dm is adjusted to the value adapted to the addressing operation. By the above, the all-cell initializing operation for initially discharging all of the discharge cells is finished.

In the following address period, voltage Ve2 is applied to sustain electrodes SU1 to SUn, and voltage Vc is applied to scan electrodes SC1 to SCn.

Next, negative scan pulse voltage Va is applied to scan electrode SC1 in the first row, and positive address pulse voltage Vd is applied to data electrodes Dk (k = 1 to m) of discharge cells to emit light in the first row in data electrodes D1 to Dm. The voltage difference in the intersection on data electrode Dk and scan electrode SC1 is obtained by adding the difference between the wall voltage on data electrode Dk and the wall voltage on scan electrode SC1 to the difference (Vd-Va) of the external application voltages, and it exceeds the discharge start voltage. Addressing discharge occurs between data electrode Dk and scan electrode SC1, and between sustain electrode SU1 and scan electrode SC1. A positive wall voltage is accumulated on scan electrode SC1 and a negative wall voltage is accumulated on sustain electrode SU1. A negative wall voltage is accumulated also on data electrode Dk.

In such a manner, the addressing operation is performed by causing addressing discharge in the discharge cells to emit light in the first row and accumulating the wall voltage on the electrodes. On the other hand, the voltage at the intersection between data electrodes D1 to Dm to which address pulse voltage Vd is not applied and scan electrode SC1 does not exceed the discharge start voltage, so that addressing discharge does not occur. The addressing operation is performed to the discharge cells in the n-th row and, after that, the address period is finished.

In the following sustain period, first, positive sustain pulse voltage Vs is applied to scan electrodes SC1 to SCn, and 0V is applied to sustain electrodes SU1 to SUn. In the discharge cells in which addressing discharge occurs, the difference between the voltage on scan electrode SCi and the voltage on sustain electrode SUi becomes equal to a value obtained by adding the difference between the wall voltage on scan electrode SCi and the wall voltage on sustain electrode SUi to sustain pulse voltage Vs, and it exceeds the discharge start voltage.

Sustain discharge occurs between scan electrode SCi and sustain electrode SUi and, by ultraviolet light generated at this time, phosphor layer 35 emits light. A negative wall voltage is accumulated on scan electrode SCi, and a positive wall voltage is accumulated on sustain electrode SUi. Further, the positive wall voltage is accumulated also on data electrode Dk. In the address period, sustain discharge does not occur in discharge cells in which the addressing discharge does not occur, and the wall voltage at the end of the setup period is maintained.

Subsequently, 0V is applied to scan electrodes SC1 to SCn, and sustain pulse voltage Vs is applied to sustain electrodes SU1 to SUn. In discharge cells in which the sustain discharge occurs, the voltage difference between the voltage on sustain electrode SUi and the voltage on scan electrode SCi exceeds the discharge start voltage. Consequently, sustain discharge occurs again between sustain electrode SUi and scan electrode SCi, the negative wall voltage is accumulated on sustain electrode SUi, and the positive wall voltage is accumulated on scan electrode SCi. Similarly, sustain pulses of the number obtained by multiplying the luminance weight with the luminance factor are applied alternately to scan electrodes SC1 to SCn and sustain electrodes SU1 to SUn, and the potential difference is applied across the electrodes of the display electrode pair. In such a manner, the sustain discharge successively occurs in the discharge cells in which the addressing discharge occurs in the address period.

At the end of the sustain period, the voltage difference of so-called narrow-width pulses is applied across scan electrodes SC1 to SCn and sustain electrodes SU1 to SUn. While leaving the positive wall voltage on data electrode Dk, the wall voltage on scan electrode SCi and sustain electrode SUi is canceled partially or entirely. To be concrete, the voltage on sustain electrodes SU1 to SUn is once reset to 0V and, after that, sustain pulse voltage Vs is applied to scan voltages SC1 to SCn. It causes sustain discharge between sustain electrode SUi and scan electrode SCi of the discharge cell in which the sustain discharge occurs. Before the discharge converges, that is, while a sufficient amount of charged particles generated by the discharge remain in the discharge space, voltage Ve1 is applied to sustain electrodes SU1 to SUn. Consequently, the voltage difference between sustain electrode SUi and scan electrode SCi is decreased to about (Vs-Ve1). While leaving the positive wall charge on data electrode Dk, the wall voltage between scan electrodes SC1 to SCn and sustain electrodes SU1 to SUn is weakened to about the difference (Vs-Ve1) of the voltages applied to the electrodes. Hereinbelow, the discharge is called "erase discharge".

As described above, after voltage Vs for causing the final sustain discharge and, that is, the erase discharge is applied to scan electrodes SC1 to SCn, voltage Ve1 for decreasing the potential difference between the electrodes of the display electrode pair is applied to sustain electrodes SU1 to SUn. After that, the sustaining operation in the sustain period is finished.

Next, the operation of the subfield for performing the selective initializing operation will be described.

In the selective setup period, to provide time for applying a voltage which does not cause discharge to the scan electrode and the sustain electrode (hereinbelow, this time will be described as retention time Ts), in the embodiment, the voltage applied to the electrodes at the end of the immediately preceding sustain period is continuously applied for the retention time Ts. That is, 0V is applied to data electrodes D1 to Dm, sustain pulse voltage Vs is applied to scan electrodes SC1 to SCn, and voltage Ve1 is applied to sustain electrodes SU1 to SUn.

After lapse of retention time Ts, while applying voltage Ve1 to sustain electrodes SU1 to SUn and 0V to data electrodes D1 to Dm, a ramp voltage which gently decreases from voltage Vi3' to voltage Vi4 is applied to scan electrodes SC1 to SCn.

In the discharge cell in which the sustain discharge occurs in the sustain period for the preceding subfield, weak initializing discharge occurs, and the wall voltage on scan electrode SCi and sustain electrode SUi is weakened. Since the sufficient positive wall voltage is accumulated on data electrode Dk by the immediately preceding sustain discharge, an excessive part of the wall voltage is discharged and the wall voltage is adjusted to a voltage adapted to the addressing operation.

On the other hand, the discharge cell in which the sustain discharge did not occur in the preceding subfield is not discharged, and the wall charge at the end of the setup period for the preceding subfield is kept as it is. As described above, the selective initializing operation is an operation of selectively performing the initializing discharge on a discharge cell in which the sustaining operation is performed in the sustain period for the immediate preceding subfield.

As will be described in detail later, in the embodiment, the retention time Ts is controlled based on the luminous weight of the immediately preceding subfield, APL of an image signal, and the like.

Since the operation of the subsequent address period is similar to that of the address period for the subfield of performing the all-cell initializing operation, the description will not be repeated. The operation in the subsequent sustain period is similar except for the number of sustain pulses.

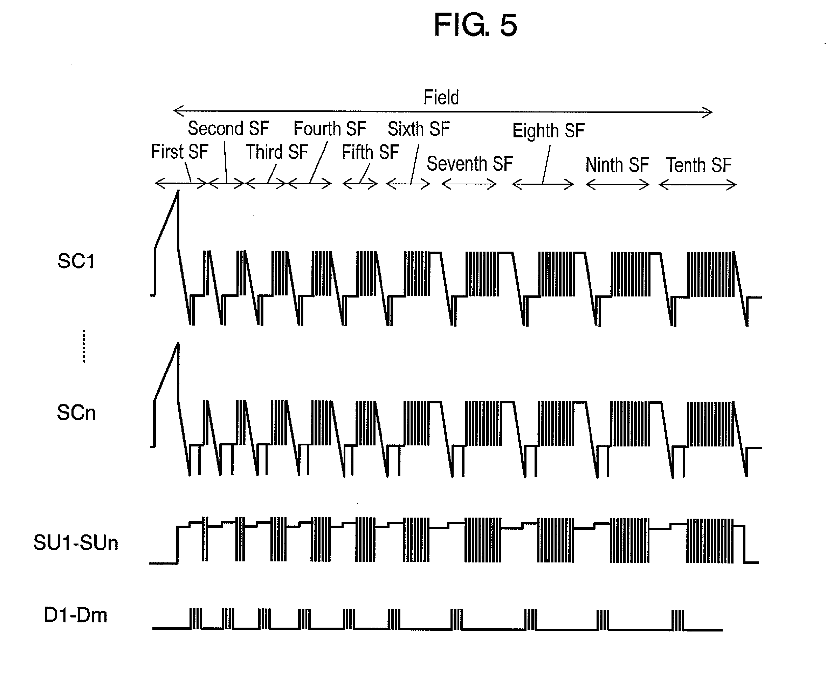

Next, the configuration of the subfield in the panel driving method in the embodiment will be described. FIG. 5 is a diagram showing outline of one field of the drive waveforms of the panel in the embodiment of the invention. The embodiment will be described on assumption that one field is divided to ten subfields (first SF, second SF, ..., and tenth SF), and the subfields have luminance weights (1, 2, 3, 6, 11, 18, 30, 44, 60, and 80). Each of the subfields is either a subfield for performing the all-cell initializing operation in the setup period (hereinbelow, referred to as "all-cell initialization subfield") or a subfield for performing the selective initializing operation in the setup period (hereinbelow, called "selective initialization subfield"). In the embodiment, the first SF is set as an all-cell initialization subfield and the second SF to the tenth SF are set as selective initialization subfields.

In the embodiment, the retention time of the selective setup period is controlled based on APL in an image signal, and retention time Ts is controlled based on the temperature in the casing detected by the thermal sensor. A method of controlling retention time Ts based on the temperature will be called "drive mode" hereinbelow.

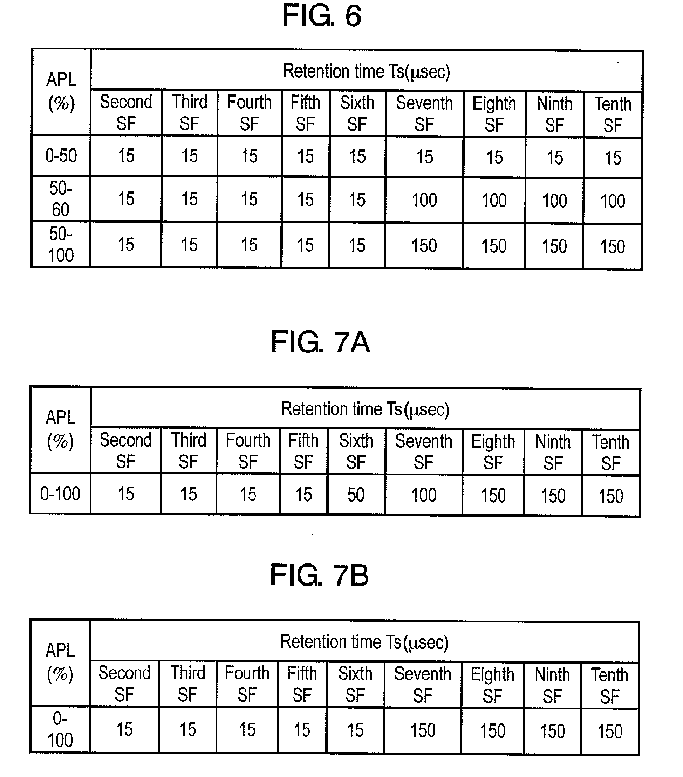

First, the relation between APL and retention time Ts in the normal-temperature drive mode used in the normal temperature range will be described. FIG. 6 is a diagram showing the relation between APL and retention time Ts in the embodiment of the invention.

In the embodiment, the length of retention time Ts is controlled based on the APL in an image signal to be displayed. For an image having an APL value of less than 50%, retention time Ts in all of the second to tenth selective initialization subfields is set to the minimum value of 15 μsec. For an image having an APL value of 50% to less than 60%, retention time Ts in the second to sixth SFs is set to 15 μsec, and retention time Ts in the seventh to tenth SFs is set to 100 μsec. For an image having an APL value of 60% or higher, retention time Ts in the second to sixth SFs is set to 15 μsec and retention time Ts in the seventh to tenth SFs is set to 150 μsec. As described above, retention time Ts in the selective initialization subfield subsequent to a subfield of heavy luminous weight is set to be long. Further, retention time Ts is set to be long for an image of a large APL value.

In the embodiment, retention time Ts in the second to sixth SFs is set to be equal to each other, and retention time Ts in the seventh to tenth SFs is set to be equal to each other. For example, retention time Ts may be varied according to the luminous weight. Retention time Ts may be set to be long in a subfield immediately subsequent to a subfield having heavy luminous weight. Although the range of the values of the APL is divided into three parts and retention time Ts is set in each of the parts, it is also possible to set so that retention time Ts increases as the value of APL increases.

Since the selective initializing operation is performed by just applying ramp voltage which gently decreases to scan electrodes SC1 to SCn, only operation of decreasing the positive wall voltage on data electrodes D1 to Dm can be performed. By the selective initializing operation, the initializing discharge is caused in an area where a discharge gap between data electrodes D1 to Dm and scan electrodes SC1 to SCn or between scan electrodes SC1 to SCn and sustain electrodes SU1 to SUn locally exists. Consequently, in the case where unnecessary wall charges accumulate in the peripheral portion of a discharge cell for some reason, there is the possibility that the unnecessary wall charges remain.

The selective initializing operation is operation for obtaining a wall voltage necessary for subsequent addressing operation by adjusting the wall voltage accumulated in the sustain discharge in the immediately preceding subfield. Whether proper wall voltage can be generated or not is largely influenced by the state of the wall charge accumulated by the erase discharge at the end of the sustain discharge. However, also after the erase discharge, a number of primings of the sustain discharge generated before that exist. If the selective initializing operation is performed at this time point, the wall charges on data electrodes D1 to Dm decrease excessively due to the influence of the primings, or unnecessary wall charges are accumulated in the discharge cells due to the influence of noise voltage applied on the electrodes or the like, so that the selective initializing operation may not be normally performed.

In the embodiment, after completion of the erase discharge in the immediately preceding subfield, the voltages applied to data electrodes D1 to Dm, scan electrodes SC1 to SCn, and sustain electrodes SU1 to SUn are retained only for predetermined retention time Ts. After the primings disappear, the ramp voltage which gently drops is applied to scan electrodes SC1 to SCn. Therefore, it can be considered that the stable selective initializing operation is realized without being influenced by the sustain discharge in the immediately preceding subfield.

Next, the low-temperature drive mode and the high-temperature drive mode used in the embodiment in addition to the normal-temperature drive mode will be described.

It became obvious that when the temperature of panel 10 becomes high or low, the possibility that the selective initializing operation is not performed normally increases like in the case where wall charges decreases excessively or unnecessary wall charges are accumulated for some reason. The inventors herein have found out that the phenomena can be improved by controlling retention time Ts based on the temperature of panel 10. Consequently, in the embodiment, a plurality of drive modes are properly used depending on the temperature of panel 10.

FIGS. 7A and 7B are diagrams showing retention time Ts in the embodiment of the present invention. FIG. 7A is a diagram showing an example of retention time Ts in the low-temperature drive mode. The low-temperature drive mode is a drive mode in which an image can be displayed stably even when the temperature of panel 10 is low. For example, it is a drive mode in the case where the plasma display device is installed in a low-temperature environment, and which is used just before the temperature of panel 10 rises such as the timing immediately after turn-on of the power source. In the low-temperature drive mode in the embodiment, irrespective of the value of APL in an image signal to be displayed, retention time Ts in the second SF to fifth SF is set to the minimum value of 15 μsec, retention time Ts in the sixth SF is set to 50 μsec, retention time Ts in the seventh SF is set to 100 μsec, and retention time Ts in the eighth to tenth SFs is set to 150 μsec. As described above, retention time Ts in the sixth SF subsequent to a subfield of relatively light luminous weight is also set to be long.

FIG. 7B is a diagram showing an example of the high-temperature drive mode. The high-temperature drive mode is a drive mode in which an image can be displayed stably even when the temperature of panel 10 is high. For example, it is a drive mode in the case where the plasma display device is installed in a high-temperature environment, and which is used in the case where power consumption increases at the time of displaying a very light image or the like and the temperature of panel 10 becomes high. In the high-temperature drive mode in the embodiment, irrespective of the value of APL in an image signal to be displayed, retention time Ts in the second SF to sixth SF is set to the minimum value of 15 μsec, and retention time Ts in the seventh SF to the tenth SF is set to 150 μsec.

Next, a method of switching the drive mode will be described. In the embodiment, the temperature of panel 10 is not directly detected. Whether there is the possibility that an area which has to be driven in the low-temperature drive mode occurs or an area which has to be driven in the high-temperature drive mode occurs in the display screen of the panel is estimated. The drive mode is switched according to the result of estimation, and an image is displayed while suppressing poor discharging.

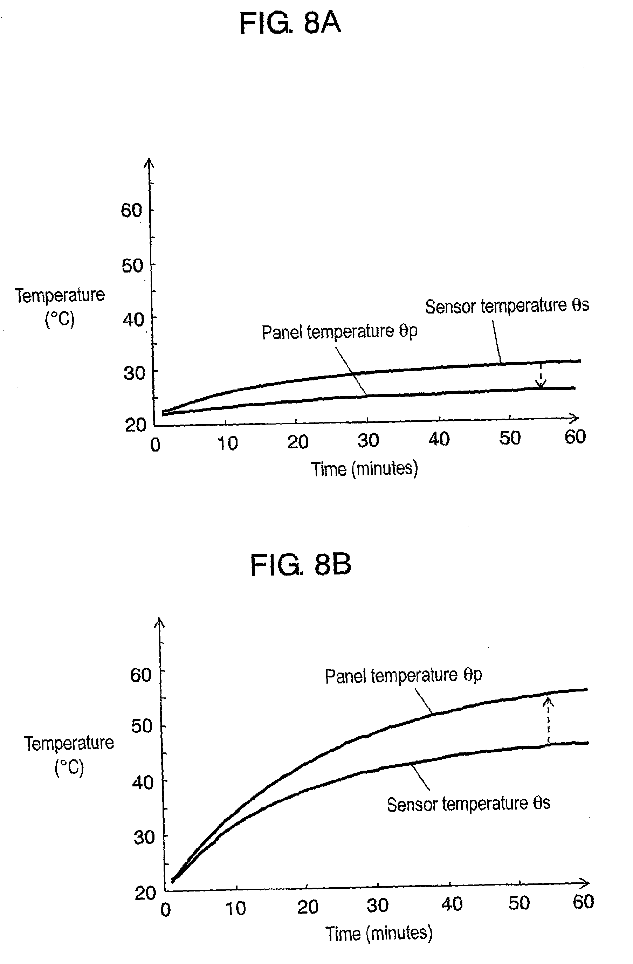

FIGS. 8A and 8B are diagrams each showing the result of measurement of the relation between temperature θs in the casing detected by thermal sensor 81 in the embodiment of the invention (hereinbelow, simply written as "sensor temperature") and temperature θp of panel 10 (hereinbelow, simply written as "panel temperature"). The vertical axis indicates temperature, and the horizontal axis indicates time. In the measurement, to suppress the influence of local temperature of panel 10 on sensor temperature θs, thermal sensor 81 is disposed on the circuit board so as not to be closely adhered to panel 10.

To estimate the possible lowest temperature of panel 10, it is sufficient to display an image requiring the most suppressed temperature of panel 10, that is, the all-cell non-light-emission pattern, measure the temperature in an area of the lowest temperature in panel 10, and calculate the difference between the measured temperature and sensor temperature θs.

FIG. 8A is a diagram showing panel temperature θp and sensor temperature θs when the all-cell non-light-emission pattern is displayed. After power-on of the plasma display device, sensor temperature θs gently rises. On the other hand, panel temperature θp rises more gently for the reason that discharge hardly occurs in panel 10 and heat generation of panel 10 itself is small. In the embodiment, it was found that, after 10 to 20 minutes, the difference between sensor temperature θs and panel temperature θp becomes almost constant and panel temperature θp at that time is lower than sensor temperature θs by about 7°C. Consequently, in the embodiment, low-temperature correction value ΔθL is set to 7°C and a temperature obtained by subtracting low-temperature correction value ΔθL from sensor temperature θs is set as estimated lowest temperature θL.

To estimate the possible highest temperature of panel 10, it is sufficient to display an image requiring the highest temperature of panel 10, that is, the all-cell light-emission pattern, measure the temperature in an area of the highest temperature in panel 10, and calculate the difference between the measured temperature and sensor temperature θs.

FIG. 8B is a diagram showing panel temperature θp and sensor temperature θs when the all-cell light-emission pattern is displayed. After power-on of the plasma display device, sensor temperature θs sharply rises. On the other hand, panel temperature θp rises more sharply for the reason that power consumption of the drive circuit is large and, in addition, panel 10 itself generates heat. Also in the embodiment, it was found that, after 10 to 20 minutes, the difference between sensor temperature θs and panel temperature θp becomes almost constant and panel temperature θp at that time is higher than sensor temperature θs by about 10°C. Consequently, in the embodiment, high-temperature correction value ΔθH is set to 10°C and a temperature obtained by adding high-temperature correction value ΔθH to the sensor temperature is set as estimated lowest temperature θH.

In the embodiment, the estimated lowest temperature θL and the estimated highest temperature θH are calculated as follows.

$$\theta L(t) = \theta s(t) - \Delta \theta Lo$$

$$\theta H(t) = \theta s(t) + \Delta \theta Ho$$

To clearly show that sensor temperature θs, estimated lowest temperature θL, and estimated highest temperature θH are functions of time "t", they are expressed as θs(t), θL(t), and θH(t), respectively. ΔθLo and ΔθHo denote the low-temperature correction value ΔθL and high-temperature correction value ΔθH, respectively which are 7°C and 10°C, respectively, in the embodiment.

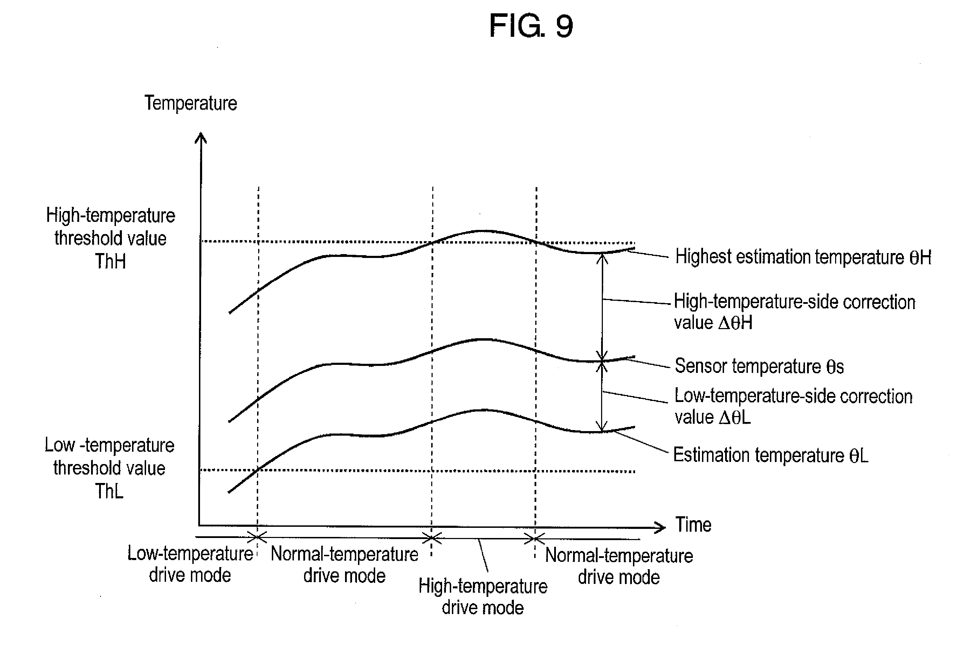

FIG. 9 is a schematic diagram showing the relations among estimated lowest temperature θL, estimated highest temperature θH, low-temperature threshold value ThL, and high-temperature threshold value ThH in the embodiment of the invention. As shown in the diagram, when estimated lowest temperature θL(t) is equal to or lower than preset low-temperature threshold value ThL, the panel is driven by using the low-temperature drive mode. When estimated highest temperature θH(t) is equal to or higher than preset high-temperature threshold value ThH, the panel is driven by using the high-temperature drive mode. In the other cases, the panel is driven in the normal-temperature drive mode.

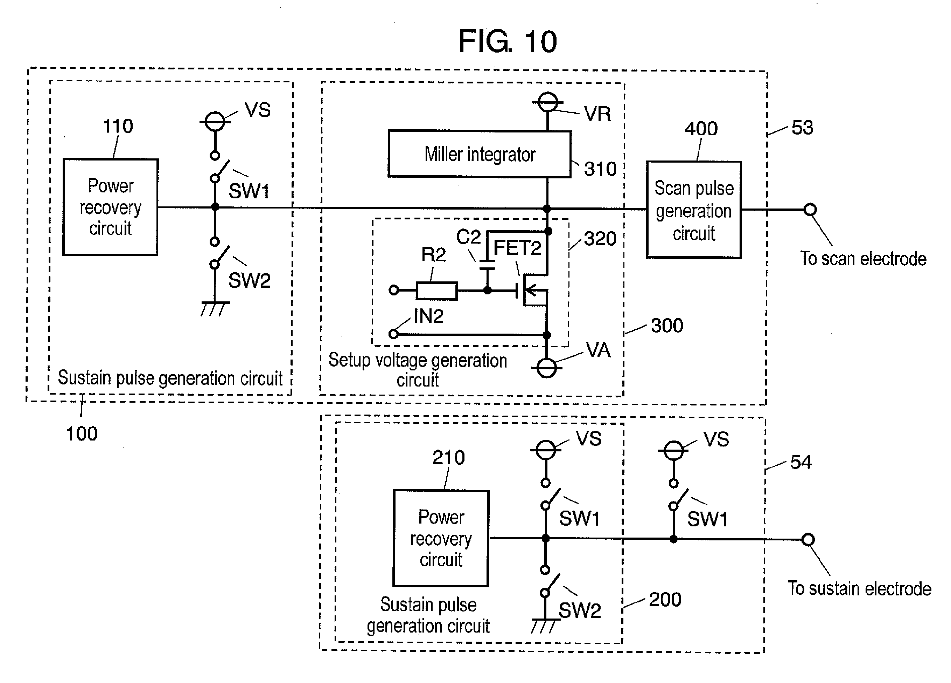

Next, a method of generating the drive voltage waveform in the selective initialization operation will be described. FIG. 10 is a circuit diagram of scan electrode drive circuit 53 and sustain electrode drive circuit 54 in the embodiment of the invention. Scan electrode drive circuit 53 has sustain pulse generation circuit 100 for generating a sustain pulse, setup waveform generation circuit 300 for generating an setup waveform, and scan pulse generation circuit 400 for generating a scan pulse.

Sustain pulse generation circuit 100 has power recovery circuit 110 for recovering power at the time of driving scan electrodes SC1 to SCn and reusing it, switching element SW11 for clamping scan electrodes SC1 to SCn to voltage Vs, and switching element SW12 for clamping scan electrodes SC1 to SCn to 0V. Scan pulse generation circuit 400 sequentially applies a scan pulse to scan electrodes SC1 to SCn in an address period. Scan pulse generation circuit 400 outputs the voltage waveform of sustain pulse generation circuit 100 or setup waveform generation circuit 300 in the setup period and the sustain period.

Setup waveform generation circuit 300 has Miller integrator 310 for generating ramp waveform voltage which rises gently and Miller integrator 320 for generating ramp waveform voltage which decreases gently. Miller integrator 320 has FET 2, capacitor C2, and resistor R2 and generates the ramp waveform voltage which gently decreases like a ramp shape to voltage Vi4. In FIG. 10, the input terminal of Miller integrator 320 is expressed as terminal IN2. Miller integrator 310 used for the all-cell initializing operation has a similar configuration.

In the embodiment, setup waveform generation circuit 300 employs the Miller integrators each using an FET which are practical and have a relatively simple configuration. However, the invention is not limited to the configuration. Any circuit may be employed as long as a ramp waveform voltage can be generated.

Sustain electrode drive circuit 54 has sustain pulse generation circuit 200 for generating a sustain pulse and switching element SW23 for applying voltage Ve1. Sustain pulse generation circuit 200 has power recovery circuit 210 for recovering power at the time of driving sustain electrodes SU1 to SUn and reusing it, switching element SW21 for clamping sustain electrodes SU1 to SUn to voltage Vs, and switching element SW22 for clamping sustain electrodes SU1 to SUn to 0V.

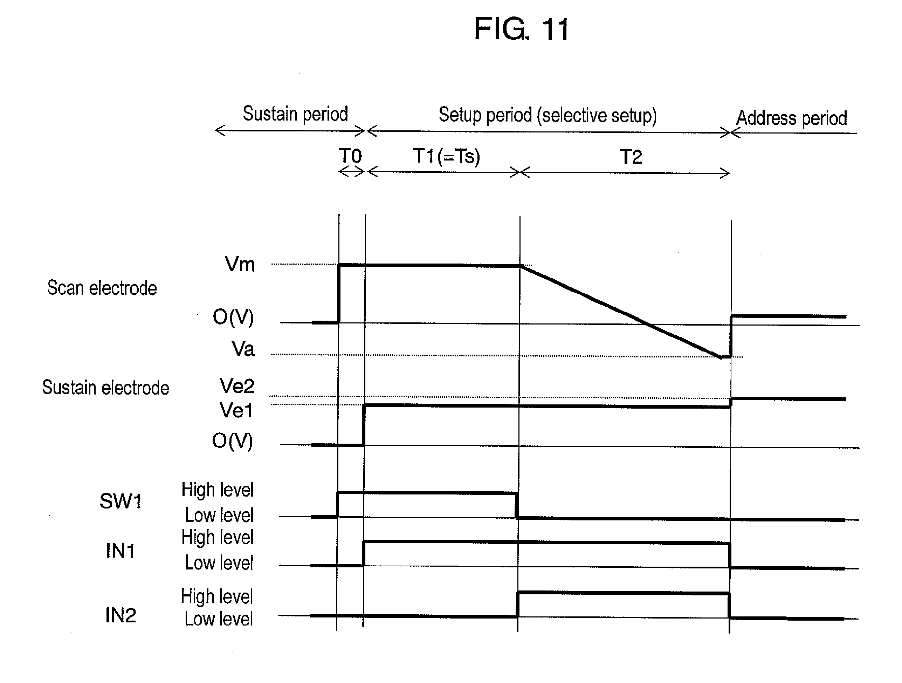

Next, the operation of setup waveform generation circuit 300 will be described. FIG. 11 is a timing chart for explaining operations of scan electrode drive circuit 53 and sustain electrode drive circuit 54 in the selective setup period in the embodiment of the invention. A period in which erase discharge is performed in the immediately preceding subfield and the subsequent period for performing the selective initializing operation are divided into three periods of T0 to T2, and each of the three periods will be described. In FIG. 4, voltages Vi3' and Vs have different waveforms. In FIG. 11, an example in which voltages Vi3' and Vs are equal to each other will be described. In the following description, operation of passing current to a switching element will be described as turn-on, and operation of interrupting current to the switching element will be described as turn-off.

Period T0

At time t0 when the erase discharge is performed in the sustain period for the immediately preceding subfield, switching element SW11 in sustain pulse generation circuit 100 is turned on. It makes scan electrodes SC1 to SCn connected to power supply VS via switching element SW11 via switching element SW11 and clamped to voltage Vs. When the voltage of scan electrodes SC1 to SCn rises sharply to voltage Vs, the voltage difference between scan electrodes SC1 to SCn and sustain electrodes SU1 to SUn exceeds the discharge start voltage, and sustain discharge occurs.

Period T1

Next, at time t1, switching element SW23 of sustain electrode drive circuit 54 is turned on. It makes sustain electrodes SU1 to SUn connected to power supply VE for erase via switching element SW23, so that the voltage of sustain electrodes SU1 to SUn sharply rises to Ve1. Time t1 is time before the sustain discharge which occurs in period T0 converges, that is, charged particles generated in the sustain discharge still remain in the discharge space. While the charged particles remain in the discharge space, the electric field in the discharge space changes. Consequently, the charged particles are re-arranged so as to loosen the changed electric field, and the wall charges are formed. At this time, the difference between voltage Vs applied to scan electrodes SC1 to SCn and voltage Ve1 applied to sustain electrodes SU1 to SUn is small, so that the wall voltage on scan electrodes SC1 to SCn and sustain electrodes SU1 to SUn is weakened. As described above, the final sustain discharge is erase discharge. Data electrodes D1 to Dm are held at 0V, and the charged particles generated in the discharge form the wall charges so as to lessen the potential difference between the voltage applied to data electrodes D1 to Dm and the voltage applied to scan electrodes SC1 to SCn. Therefore, the positive wall voltage is accumulated on data electrodes D1 to Dm.

After that, the state is held to time t2 while applying voltage Vs to scan electrodes SC1 to SCn, voltage Ve1 to sustain electrodes SU1 to SUn, and 0V to data electrodes D1 to Dm. Retention time Ts in FIG. 7 is equal to period T1. By controlling the interval of period T1, that is, the time interval from time t1 to time t2, retention time Ts can be controlled.

Period T2

Next, input terminal IN2 of Miller integrator 320 is set to the "high level". Concretely, for example, when 15V is applied to input terminal IN2, a predetermined current flows from resistor R2 toward capacitor C2, the drain voltage of FET 2 drops in the ramp shape, and output voltage of scan electrode drive circuit 53 also starts dropping in a ramp shape. After the output voltage becomes negative voltage Va, input terminal IN2 is set to the "low level".

In such a manner, retention time Ts is provided in the beginning of the setup period subsequent to the sustain period and, after that, the selective initializing operation of applying the ramp voltage which gently drops from voltage Vs to voltage Va to scan electrodes SC1 to SCn can be performed.

As described above, in the embodiment, retention time Ts is controlled based on the APL in an image. By setting retention time Ts as described above, the stable selective initializing operation can be performed.

Further, since retention time Ts is controlled based on sensor temperature θs, in any of the cases where the temperature of the panel is low or high, the selective initializing operation can be stabilized in a wide temperature range.

Although the three drive modes are switched according to the temperature around the panel in the embodiment, the number of drive modes is not limited to three but may be two or four or more. Further, retention time Ts may be controlled continuously according to the temperature.

The configuration of estimating the temperature of the panel based on sensor temperature θs is employed in the embodiment. Alternatively, the temperature of the panel may be directly detected.

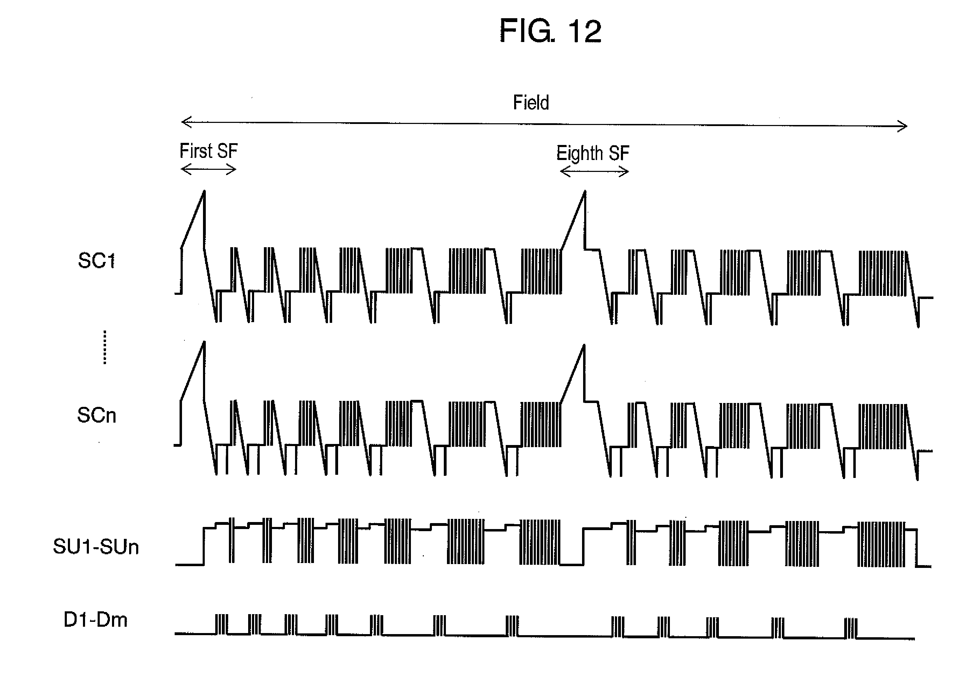

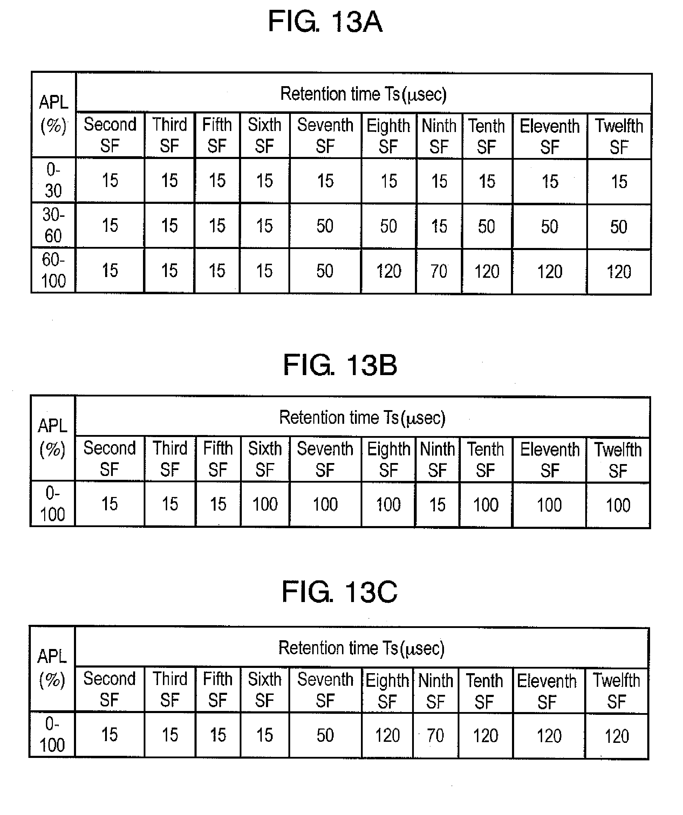

Further, in the embodiment, one field is constructed by ten subfields, the first SF is the all-cell initialization subfield, and the second SF to the tenth SF are selective initialization subfields. The invention is not limited to the subfield configuration. FIG. 12 is a diagram showing outline of one field of the drive waveform of the panel in another embodiment of the invention in which two all-cell initialization subfields are provided in one field period. FIGS. 13A to 13C are diagrams showing an example of retention time Ts in the another embodiment of the invention. In the subfield configuration, one field is divided into twelve subfields (first SF, second SF, ..., and twelfth SF), luminous weights on the subfields are, for example, 1, 2, 4, 10, 24, 36, 40, 4, 16, 22, 28, and 68, respectively, the first SF and the eighth SF are all-cell initialization subfields, and the other subfields are selective initialization subfields.

In the normal-temperature drive mode, as shown in FIG. 13A, for an image having an APL value of less than 30%, retention time Ts in all of the second to twelfth subfields is set to the minimum value of 15 μsec. For an image having an APL value of 30% to less than 60%, retention time Ts in the second to sixth SFs and the ninth SF is set to 15 μsec, and retention time Ts in the seventh to eighth SFs and the tenth to twelfth SFs is set to 50 μsec. For an image having an APL value of 60% or higher, retention time Ts in the second to sixth SFs is set to 15 μsec, retention time Ts in the seventh SF is set to 50 μsec, retention time Ts in the eighth SF and the tenth to twelfth SFs is set to 120 μsec, and retention time Ts in the ninth SF is set to 70 μsec.

In the low-temperature drive mode, as shown in FIG. 13B, for example, irrespective of the APL value of an image signal to be displayed, retention time Ts in the second to fifth SFs and the ninth SF is set to the minimum value of 15 μsec. Retention time Ts in the sixth to eighth SFs and the tenth to twelfth SFs is set to 100 μsec.

In the high-temperature drive mode, as shown in FIG. 13C, for example, irrespective of the APL value of an image signal to be displayed, retention time Ts in the second to sixth SFs is set to the minimum value of 15 μsec, retention time Ts in the seventh SF is set to 50 μsec, retention time Ts in the ninth SF is set to 70 μsec, and retention time Ts in the eighth SF and the tenth to twelfth SFs is set to 120 μsec.

For an image having a large APL value, retention time Ts is set to be long. It is sufficient to control retention time Ts in the low-temperature drive mode and the high-temperature drive mode to be equal to or longer than retention time Ts in the normal-temperature drive mode.

The present invention is not always limited to the subfield configuration but may employ other subfield configurations such as a configuration in which all of subfields are set to selective initialization subfields.

The embodiment has been described by defining retention time Ts as time after application of a voltage for weakening the final sustain discharge to sustain electrode 23 until application of the ramp waveform voltage which decreases to scan electrode 22 in the following subfield setup period. In the configuration in which the voltage for weakening the final sustain discharge is not applied to sustain electrode 23, time after application of sustain pulse voltage Vs for generating the final sustain discharge to scan electrode 22 until application of the ramp waveform voltage which decreases to scan electrode 22 in the following subfield setup period may be defined as retention time Ts.

Further, in the embodiment, the voltages applied to the scan electrode and the sustain electrode in the retention time have been described as the voltages applied to the electrodes at the end of the immediately preceding sustain period. The invention is not limited to the voltages but any voltages which do not cause discharge may be used as the voltages applied to the scan electrode and the sustain electrode in the retention time.

The concrete numerical values used in the embodiment of the invention are just an example. It is desirable to set optimum values in accordance with the characteristics of the panel, the specifications of the plasma display device, or the like.

INDUSTRIAL APPLICABILITY

The plasma display device and the panel driving method of the present invention realize the stable selective initializing operation, can drive a panel with high brightness, high contrast, and high image display quality, and are useful as an image display apparatus or the like using a panel.

**Claims**

1.   A method of driving a plasma display panel including a plurality of discharge cells each having a display electrode pair, which is formed of a scan electrode and a sustain electrode, and a data electrode, and displaying an image by providing a plurality of subfields in one field period, each of the subfields having:

   a setup period for causing initializing discharge in the discharge cell by applying a ramp waveform voltage that gently decreases to the scan electrode;
   an address period for causing addressing discharge in the discharge cell; and
   a sustain period for applying sustain pulse voltage alternately to the display electrode pair to cause sustain discharge in the discharge cell and, after that, applying voltage for weakening the final sustain discharge to the sustain electrode, the method comprising:

   providing retention time for retaining voltages to be applied to the scan electrode and the sustain electrode between time when the voltage for weakening final sustain discharge is applied to the sustain electrode and time when the ramp waveform voltage which decreases is applied to the scan electrode in the setup period in the following subfield; and
   controlling the retention time based on average brightness of image signals.

2.   The method of driving a plasma display panel according to claim 1, wherein at least one subfield is provided in one field period, the subfield being set so that the retention time when average brightness of the image signals is high is longer than the retention time when average brightness of the image signals is low.

3.   The method of driving a plasma display panel according to claim 1, wherein voltage applied to the data electrode in the retention time is set to be lower than voltage applied to the scan electrode in the retention time.

4.   A plasma display device comprising:

   a plasma display panel having a plurality of discharge cells each having a display electrode pair, which is formed of a scan electrode and a sustain electrode, and a data electrode;
   an APL detector for detecting average brightness of an image signal; and
   a drive circuit for driving the plasma display panel by constructing one field period by using a plurality of subfields, each of the subfields having:

   a setup period for causing initializing discharge in the discharge cell by applying a ramp waveform voltage that gently decreases to the scan electrode;
   an address period for causing addressing discharge in the discharge cell; and
   a sustain period for applying sustain pulse voltage alternately to the display electrode pair to cause sustain discharge in the discharge cell and, after that, applying voltage for weakening the final sustain discharge to the sustain electrode,

   wherein the drive circuit provides retention time for retaining voltages to be applied to the scan electrode and the sustain electrode between time when the voltage for weakening final sustain discharge is applied to the sustain electrode and time when the ramp waveform voltage which decreases is applied to the scan electrode in the setup period in the following subfield, and controls the retention time based on average brightness of an image signal detected by the APL detector.

5.   A method of driving a plasma display panel including a plurality of discharge cells each having a display electrode pair, which is formed of a scan electrode and a sustain electrode, and a data electrode, the method comprising:

   providing a plurality of subfields in one field period, each of the subfields having:

   a setup period for causing initializing discharge in the discharge cell by applying a ramp waveform voltage that gently decreases to the scan electrode;
   an address period for causing addressing discharge in the discharge cell; and

a sustain period for applying sustain pulse voltage alternately to the display electrode pair to cause sustain discharge in the discharge cell;

providing retention time for retaining voltages to be applied to the scan electrode and the scan electrode between time when sustain pulse voltage for causing final sustain discharge in the sustain period is applied to the scan electrode and time when the ramp waveform voltage which decreases is applied to the scan electrode in the setup period in the following subfield; and controlling the retention time based on average brightness of the image signal.

6. A method of driving a plasma display panel including a plurality of discharge cells each having a display electrode pair, which is formed of a scan electrode and a sustain electrode, and a data electrode and displaying an image by providing a plurality of subfields in one field period, each of the subfields having:

a setup period for causing initializing discharge in the discharge cell by applying a ramp waveform voltage that gently decreases to the scan electrode;
an address period for causing addressing discharge in the discharge cell; and
a sustain period for applying sustain pulse voltage alternately to the display electrode pair to cause sustain discharge in the discharge cell and applying voltage for weakening final sustain discharge to the sustain electrode, the method comprising:
providing retention time for retaining voltages to be applied to the scan electrode and the scan electrode between time when the voltage for weakening the final sustain discharge is applied and time when the ramp waveform voltage which decreases is applied to the scan electrode in the setup period in the following subfield, and controlling the retention time based on ambient temperature of the plasma display panel.

7. The method of driving a plasma display panel according to claim 6, wherein at least one subfield is provided in one field period, the subfield being set so that the retention time when the ambient temperature is high is longer than the retention time when the ambient temperature is low.

8. The method of driving a plasma display panel according to claim 6, wherein at least one subfield is provided in one field period, the subfield being set so that the retention time when the ambient temperature is low is longer than the retention time when the ambient temperature is high.

9. The method of driving a plasma display panel according to claim 6, wherein the retention time is changed based on the ambient temperature and, in addition, average brightness of an image signal, and at least one subfield is provided in one field period, the subfield being set so that the retention time when the average brightness of the image signal is high is longer than the retention time when the average brightness of the image signal is low.

10. The method of driving a plasma display panel according to claim 6, wherein voltage applied to the data electrode in the retention time is set to be lower than voltage applied to the scan electrode in the retention time.

11. A plasma display device comprising:

a plasma display panel having a plurality of discharge cells each having a display electrode pair, which is formed of a scan electrode and a sustain electrode, and a data electrode;
a temperature detector for detecting ambient temperature of the plasma display panel; and
a drive circuit for driving the plasma display panel by constructing one field by using a plurality of subfields, each of the subfields having:

a setup period for causing initializing discharge in the discharge cell by applying a ramp waveform voltage that gently decreases to the scan electrode;
an address period for causing addressing discharge in the discharge cell; and
a sustain period for applying sustain pulse voltage alternately to the display electrode pair to cause sustain discharge in the discharge cell and, after that, applying voltage for weakening the final sustain discharge to the sustain electrode,

wherein the drive circuit provides retention time for retaining voltages to be applied to the scan electrode and the sustain electrode between time when the voltage for weakening the final sustain discharge is applied to the sustain electrode and time when the ramp waveform voltage which decreases is applied to the scan electrode in the setup period in the following subfield, and controls the retention time based on the temperature detected by the temperature detector.

12. A method of driving a plasma display panel including a plurality of discharge cells each having a display electrode pair, which is formed of a scan electrode and a sustain electrode, and a data electrode, and displaying an image by providing a plurality of subfields in one field period, each of the subfields having:

a setup period for causing initializing discharge in the discharge cell by applying a ramp waveform voltage that gently decreases to the scan electrode;

an address period for causing addressing discharge in the discharge cell; and

a sustain period for applying sustain pulse voltage alternately to the display electrode pair to cause sustain discharge in the discharge cell, the method comprising:

providing retention time for retaining voltages to be applied to the scan electrode and the scan electrode between time when sustain pulse voltage for causing final sustain discharge in the sustain period is applied to the scan electrode and time when the ramp waveform voltage which decreases is applied to the scan electrode in the setup period in the following subfield; and controlling the retention time based on ambient temperature of the plasma display panel.

# FIG. 1

# FIG. 2

Discharge cell

# FIG. 3

FIG. 4

Field

First SF — Second SF

Setup period | Address period | Sustain period | Setup period | Setup period | Address period | Sustain period | Setup period

SC1

Vi1, Vi2, Vi3, Vi4, Vc, Va, Vs, Vi3', Vi4, Vs, Ts

SCn

Vs, Ts

SU1-SUn

Ve1, Ve2, Vs, Vs, Ve1, Ve2

D1-Dm

Vd

# FIG. 5

EP 1 990 795 A1

## FIG. 6

| APL (%) | Retention time Ts(μsec) | | | | | | | | |
|---|---|---|---|---|---|---|---|---|---|
| | Second SF | Third SF | Fourth SF | Fifth SF | Sixth SF | Seventh SF | Eighth SF | Ninth SF | Tenth SF |
| 0-50 | 15 | 15 | 15 | 15 | 15 | 15 | 15 | 15 | 15 |
| 50-60 | 15 | 15 | 15 | 15 | 15 | 100 | 100 | 100 | 100 |
| 50-100 | 15 | 15 | 15 | 15 | 15 | 150 | 150 | 150 | 150 |

## FIG. 7A

| APL (%) | Retention time Ts(μsec) | | | | | | | | |
|---|---|---|---|---|---|---|---|---|---|
| | Second SF | Third SF | Fourth SF | Fifth SF | Sixth SF | Seventh SF | Eighth SF | Ninth SF | Tenth SF |
| 0-100 | 15 | 15 | 15 | 15 | 50 | 100 | 150 | 150 | 150 |

## FIG. 7B

| APL (%) | Retention time Ts(μsec) | | | | | | | | |
|---|---|---|---|---|---|---|---|---|---|
| | Second SF | Third SF | Fourth SF | Fifth SF | Sixth SF | Seventh SF | Eighth SF | Ninth SF | Tenth SF |
| 0-100 | 15 | 15 | 15 | 15 | 15 | 150 | 150 | 150 | 150 |

# FIG. 8A

# FIG. 8B

# FIG. 9

Temperature

High-temperature threshold value ThH

Highest estimation temperature $\theta H$

High-temperature-side correction value $\Delta\theta H$

Sensor temperature $\theta s$

Low-temperature-side correction value $\Delta\theta L$

Low -temperature threshold value ThL

Estimation temperature $\theta L$

Time

Low-temperature drive mode

Normal-temperature drive mode

High-temperature drive mode

Normal-temperature drive mode

# FIG. 10

# FIG. 11

EP 1 990 795 A1

## FIG. 12

EP 1 990 795 A1

# FIG. 13A

| APL (%) | Retention time Ts(μsec) | | | | | | | | | |
|---|---|---|---|---|---|---|---|---|---|---|
| | Second SF | Third SF | Fifth SF | Sixth SF | Seventh SF | Eighth SF | Ninth SF | Tenth SF | Eleventh SF | Twelfth SF |
| 0-30 | 15 | 15 | 15 | 15 | 15 | 15 | 15 | 15 | 15 | 15 |
| 30-60 | 15 | 15 | 15 | 15 | 50 | 50 | 15 | 50 | 50 | 50 |
| 60-100 | 15 | 15 | 15 | 15 | 50 | 120 | 70 | 120 | 120 | 120 |

# FIG. 13B

| APL (%) | Retention time Ts(μsec) | | | | | | | | | |
|---|---|---|---|---|---|---|---|---|---|---|
| | Second SF | Third SF | Fifth SF | Sixth SF | Seventh SF | Eighth SF | Ninth SF | Tenth SF | Eleventh SF | Twelfth SF |
| 0-100 | 15 | 15 | 15 | 100 | 100 | 100 | 15 | 100 | 100 | 100 |

# FIG. 13C

| APL (%) | Retention time Ts(μsec) | | | | | | | | | |
|---|---|---|---|---|---|---|---|---|---|---|
| | Second SF | Third SF | Fifth SF | Sixth SF | Seventh SF | Eighth SF | Ninth SF | Tenth SF | Eleventh SF | Twelfth SF |
| 0-100 | 15 | 15 | 15 | 15 | 50 | 120 | 70 | 120 | 120 | 120 |

**INTERNATIONAL SEARCH REPORT**

| International application No. |
| --- |
| PCT/JP2007/053508 |

A.  CLASSIFICATION OF SUBJECT MATTER
*G09G3/288*(2006.01)i, *G09G3/20*(2006.01)i, *G09G3/28*(2006.01)i, *H04N5/66*(2006.01)i

According to International Patent Classification (IPC) or to both national classification and IPC

B.  FIELDS SEARCHED

Minimum documentation searched (classification system followed by classification symbols)
G09G3/288, G09G3/20, G09G3/28, H04N5/66

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2007 |
| Kokai Jitsuyo Shinan Koho | 1971–2007 | Toroku Jitsuyo Shinan Koho | 1994–2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2001-272946 A  (NEC Corp.), 05 October, 2001 (05.10.01), Fig. 18; all pages (Family: none) | 1-5 |
| X A | JP 2002-207449 A  (Fujitsu Hitachi Plasma Display Ltd.), 26 July, 2002 (26.07.02), Fig. 7; all pages (Family: none) | 6,7,9-12 8 |

☐  Further documents are listed in the continuation of Box C.        ☐  See patent family annex.

| | |
| --- | --- |
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    21 March, 2007 (21.03.07) | Date of mailing of the international search report<br>    03 April, 2007 (03.04.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000242224 A